(19) Europäisches Patentamt
European Patent Office
Office européen des brevets

(11) Publication number: 0 000 247
B1

(12) **EUROPEAN PATENT SPECIFICATION**

(45) Date of publication of patent specification: **04.08.82**

(51) Int. Cl.³: **C 08 F 251/00**

(21) Application number: **78300036.7**

(22) Date of filing: **13.06.78**

(54) **Water-absorbent starch copolymerisates and method for their preparation.**

(30) Priority: **20.06.77 US 808482**

(43) Date of publication of application:
**10.01.79 Bulletin 79/1**

(45) Publication of the grant of the patent:
**04.08.82 Bulletin 82/31**

(84) Designated Contracting States:
**BE DE FR GB NL SE**

(56) References cited:
**FR - A - 2 305 452**
**FR - A - 2 349 617**

**Starch & its Derivatives, J. A. Radley, Chapman & Hall 1968, p. 384**

(73) Proprietor: **A.E. STALEY MANUFACTURING COMPANY**
**2200 Eldorado Street**
***Decatur, Illinois 62525 (US)***

(72) Inventor: **Young, Austin Harry**
**151 Point Bluff**
**Decatur Macon County, Illinois (US)**
Inventor: **Verbanac, Frank**
**12 Dakota Drive**
**Decatur Macon County, Illinois (US)**

(74) Representative: **Fentiman, Denis Richard et al,**
**Elkington and Fife High Holborn House 52/54**
**High Holborn**
**London WC1V 6SH (GB)**

**EP 0 000 247 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Water-absorbent starch copolymerisates and method for their preparation

This invention relates to water-absorbent starch copolymerisates.

Within recent years, certain derivatised starches capable of absorbing and retaining large amounts of water have been developed. These derivatised starches are frequently referred to as "water-absorbent starches". In U.S. Patent Nos. 3,935,099 and 3,997,484 (both by Weaver et al.), starch polymers which reportedly absorb more than 1,000 times their own weight are disclosed. These water-absorbent starches are generally prepared by grafting polyacrylonitrile to starch molecules and then derivatising the polyacrylonitrile chains to anions. The grafting is accomplished by free-radical catalysis (e.g., ceric or irradiation). The starch-grafting process is difficult to control and time consuming. The achievement of a critical grafting level is an essential prerequisite for a water-absorbent, end-product. A series of derivatisation and neutralisation steps are typically used to convert the nitrile group to anions and a water-absorbent starch product. This contaminates the product with salt. The water absorbency properties of these salt-contaminated starches are seriously impaired when they are used in aqueous solutions which contain trace amounts of salts and minerals. It is also difficult to achieve uniform and reproducible water-absorbency results. This apparently arises from difficulties in controlling the reaction. These water-absorbent starch compositions are also deficient in certain other properties which are essential and desirable for many end-usages (e.g., lack adhesiveness, prefabrication and shaping, film-forming, bonding, coating, etc. properties). This generally restricts their usage to limited areas of application (e.g., separately contained by a water-permeable enclosure or separately added or mixed to another substrate). In addition, these water-absorbent starches cannot be effectively used at high-solid coating levels or be readily affixed or bonded to a carrier or substrate or easily provided in a preformed shape.

United States Patent No. 3,661,815 by Smith also discloses analogous water-absorbent starches which are prepared by saponifying starch-polyacrylonitrile graft derivatives with certain alkali metal bases. These water-absorbent starch grafts reportedly absorb more than 50 times their weight of water. The Smith process and products suffer from similar deficiencies as mentioned above with respect to Weaver et al.

French Patent 2305452 discloses water-absorbent resins which are copolymers of

(A) at least one polysaccharide selected from starches and cellulose; and

(B) a water soluble monomer having a polymerisable double bond and at least one hydrophilic group; the copolymer being cross linked with

(C) at least one cross-linking agent

Allyl-etherified starch is listed amongst many other suitable polysaccharide starching materials but the use of this starch is not exemplified and there is no clear teaching as to how this starch can be used to make a water-absorbent resin.

There is a need in the art to more easily and effectively prepare water-absorbent starch compositions under conditions which provide greater uniformity and end-product reproducibility. Greater tolerance and compatibility with aqueous solutions containing salt and mineral contaminants is also required. Even more important, is the development of a water-absorbent starch which can be easily bonded or affixed to a substrate or preformed. Such a water-absorbent starch would considerably expand upon the versatility and usage of water-absorbent starches by the trade.

An object of the invention is to provide a simple and reproducible method for preparing water-absorbent starch compositions. Another object is to obtain water-absorbent starch compositions which in comparison to existing water-absorbent starches have improved versatility, utility and functional properties. A further object is to provide a method for applying or affixing water-absorbent starches to carriers or substrates or preparing preformed products and the products thereof.

According to the present invention there is provided a starch copolymerisate capable of absorbing several times its own weight of water comprising the copolymerisate product of ethylenically unsaturated starch molecules and ethylenically unsaturated monomers with the ethylenically unsaturated monomers forming a connective polymeric linkage between the copolymerised starch molecules characterised in that the copolymerisate is made up of a non-linear lattice of a plurality of starch chains linked together by polymeric linkages represented by the formula:

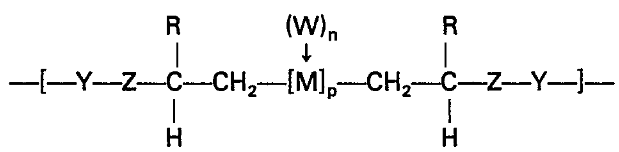

(I)

wherein Y represents a starch chain of D-glucose units or a hydrolysed or derivatised starch chain, Z represents an organo group which links the

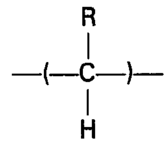

group to the carbon atom of the starch chain by a sulphur atom or an oxygen atom, R is hydrogen or a monovalent organic radical, M represents a plurality of copolymerised ethylenically unsaturated monomers with "p" representing the number of copolymerised monomeric units in the linkage, (W) is a water-attractant group or a hydrophilic moiety such as an anion, cation, non-ion, amphoteric, zwitterion or amphiphilic moiety or a mixture thereof linked to the polymeric linkage and "n" represents the number of (W) moieties contained within the polymeric linkage of the copolymerised monomers with the number of (W) moieties being sufficient to impart water-absorbency properties to the copolymerisate.

The water-absorbent starches or their precursors may be prepared by a copolymerisation process which comprises copolymerising:

(a) starch chains containing appendant, terminal ethylenic unsaturated groups represented by the formula:

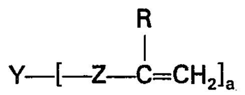 (II)

wherein Y, Z and R are as defined above and "a" represents the degree of substitution of the terminal unsaturated groups on the starch chain, and

(b) ethylenically unsaturated monomers represented by the formula:

$$M'—(—W')_{n'}$$

wherein M' represents an ethylenically unsaturated monomer, "(W')" represents at least one water-attractant group or a precursor thereof, and n' is an integer

to provide a copolymerisate comprising a plurality of starch chains linked together by polymeric linkages represented by the formula:

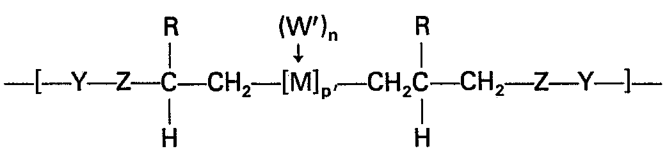

wherein Y, Z, R, (W') and n are as defined above, M represents a plurality of compolymerised ethylenically unsaturated monomers which contain a sufficient number of (W) or (W') precursors within the polymeric linkage to impart water-absorbency to the copolymerised product, and "p'" represents the number of copolymerised ethylenically unsaturated monomers linking together the starch chains.

In the copolymerisation process, a wide variety of $M'—(W')_{n'}$ monomers may be used to prepare the water-absorbent starch of this invention. The value of the n' integer and the particular "W" or "W'" precursors which are used in the copolymerisation process may vary considerably. Some of the monomers will contain "W" or "W'" precursors (e.g., n' has a value of 1 to 3) while others may be free from the "W" or "W'" precursor moieties (e.g., n' is 0). Similarly, the copolymerised monomers may be essentially comprised of monomers which contain the "W" or "W'" precursors. In the aforementioned formula, M' may be comprised of an ethylenically unsaturated portion of an organic group of the same chemical composition, or a mixture of different copolymerised monomers in which the M' group differs in composition. Likewise, the "W" or "W'" precursors may be the same or different in type. The amount of "W" monomer or "W'" monomer precursors copolymerised with the starch is maintained at a level sufficient to impart water-absorbency to the copolymerised starch product. If "W'" precursors are solely used, then it is necessary to convert a sufficient number of precursors to the water attractant form to achieve the desired water-absorbent, starch copolymerisate product.

In comparison to existing water-absorbent starches, the present starch copolymerisates are more versatile and useful. They may be prefabricated from water-soluble or water-dispersible, modified or hydrolysed starches into high-molecular-weight and cross-linked, water-absorbent starch copolymerisates. In general, the ethylenically unsaturated starches used herein are most typically

provided in a water-soluble form or may be easily converted to such a form. This renders the present invention particularly applicable to prefabricating operations wherein water or aqueous systems are used to disperse, dissolve or plasticise the starch. The invention therefore is ideally suited for most prefabricating operations (e.g., coating, moulding, casting, extrusion, drying, sheeting, printing, bonding, encapsulating, gelling, impregnating, laminating, plasticising, etc.) wherein the starch is initially provided in a form most suitable for prefabrication (e.g., liquid, pliable, mouldable, etc.) and then preformed and converted into a solid object.

The starch portion of the ethylenically unsaturated starch chains may be derived from a variety of starch sources, including cereal, leguminous, tuber starches. Illustrative starches include tapioca, corn, high amylose, sweet potato, waxy maize, canna, arrowroot, wheat, sorghum, waxy sorghum, waxy rice, soya, rice, pea, amylose or amylopectin fractions, combinations thereof and the like. The starch amylose content affects the temperature at which a starch will convert to a water-dispersible or starch paste form. The high amylose starches typically require elevated temperatures and pressures (e.g., extrusion, jet cooking, etc.), for uniform dispersal into aqueous systems. In contrast starches of a lower amylose content (e.g., 30% by weight amylose or less) are more easily dispersed or pasted in water (e.g., 50° to 70°C). Prepasted or pregelled starches of an amylose content of less than 30% by weight normally disperse into water at an ambient temperature (e.g., 23°C).

For many prefabricates, it is advantageous to modify or alter the starch chain to achieve a more functional and versatile starch product. This may be accomplished by derivatising the starch chains, so that they contain other substituents (e.g., esters or ethers which may contain cationic, anionic, non-ionic, amphoteric, etc. groups). The ethylenically unsaturated starches may be provided in the pregelled or prepasted form or hydrolysed (e.g., chemical or enzymatic hydrolysis of granular or non-granular ethylenically unsaturated starches) to improve upon their dispersibility into aqueous systems ethylenically unsaturated dextrins, maltodextrins and other low viscosity imparting ethylenically unsaturated hydrolysates (e.g., D.E. 0.2 to 30), are particularly well suited for coating applications. Such ethylenically unsaturated starch hydrolysates provide a means for achieving a high-solids and low viscosity system which is particularly well suited for aqueous coating and prefabricating applications. Modification, derivatisation or hydrolysis of such starches may be accomplished prior or after its derivatisation to the ethylenically unsaturated form.

Ethylenically unsaturated starches which contain hydrophobic substituents may be used but will typically require a dispersant. Water-miscible, organo dispersants such as alkanols (e.g. methyl, ethyl, isopropyl, or butyl-alcohol), polyhydric alcohols (e.g. glycerol, ethylene glycol), ethers, (e.g. methyl, ethyl or propyl ethers, etc.), ketones (methyl ethyl ketone, ethyl ketone, etc.), as well as conventional anionic, non-ionic and cationic surface active agents or emulsifiers (e.g., see McCutcheon's Detergents and Emulsifiers—North American Edition—1975) may be used to facilitate their conversion to a more water-dispersible form.

It is usually advantageous to employ hydrophilic, ethylenically unsaturated starches which will uniformly disperse into water at temperatures above the starch gelation point without the aid of water-miscible organo dispersants or surfactant systems. Hydrophilic starches characterised as yielding a centrifugal starch residue of less than 25% by weight (preferably less than 10% by weight) upon immersion in water (one part by weight ethylenically unsaturated starch/100 pbw water) for one hour at temperatures above their gelation point and centrifugation at 103 g's for 10 minutes are most suitably used to coating and prefabricating applications. Hydrophilic ethylenically unsaturated starches containing pendant ethylenically unsaturated groups with polar moieties or substituents to impart hydrophilicity to the unsaturated portion of the starch molecule (e.g. hydroxy, carboxy, amide, carbamyl, sulphoamyl, imido, sulphoamino, thio, thiolamino, oxy, thiocarbonyl, sulphonyl, carbonyl, sulphoamido, quaternary ammonium halides, the alkali or ammonium salts) are especially useful.

The water-dispersible, ethylenically unsaturated starches herein may be prepared by a variety of starch derivatisation processes. Derivatisation processes which may be used to produce appendant, monoethylenically unsaturated groups include reacting alkali metal starch or hydroxyethylated starch salts with an allyl propiolate to provide carboxylated vinyl starch ether; reacting starch with ethylenically unsaturated organic carboxylic anhydrides (e.g., methacrylic anhydride, etc) or organic allyl halides (e.g. allyl bromides), allyl chloroformates, or epoxides (e.g., butadiene monoxides, etc.) to provide ethylenically unsaturated starch esters or ethers. The most suitable monoethylenic unsaturated starches are the starch esters of alpha, beta ethylenically unsaturated carboxylic acids (e.g., acrylate, methacrylate, crotonate, citraconate, itaconate starch esters as well as alkali salts and amides thereof, mixtures thereof and the like); N-allyl carbamate starch esters (e.g., Starch

$$-(-O-\overset{\displaystyle O}{\overset{\|}{C}}-\overset{\displaystyle H}{\overset{|}{N}}-CH_2-CH=CH_2);$$

glycidyl methacrylate and glycidyl acrylate starch ethers (e.g., see U.S. Patent No. 3,448,089); allyl starch ethers (e.g., allyl, isopropenyl, etc.); allyl alkyl starch ethers (e.g., ethyl, propyl, butyl, etc. starch ethers) and the allyl alkylene oxide starch ethers; allyloxyalkyl starch ethers (e.g., the allyl oxyethyl,

oxypropyl and oxybutyl, etc. starch ethers); allyloxy hydroxyalkyl starch (e.g., 3 - allyloxy - 2 - hydroxy-propyl starch, etc.); starch acrylamides, etc.; combinations thereof and the like.

In a more limited embodiment of the invention, the ethylenically unsaturated starches comprise those starches which will readily and uniformly copolymerise with the bridging comonomers. Ethylenically unsaturated starches which contain polar groups immediately juxtapositional to the unsaturated group and which activate the copolymerisability of the double bonds in the presence of free-radical initiating systems are particularly well suited for this purpose. Such ethylenically unsaturated starches may be represented by Formula III:

(III) 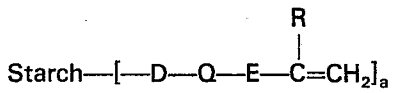

wherein starch is a starch chain of D-glucose units, E represents an activating polar group juxtapositional to the ethylenic unsaturation, D is sulphur or oxygen, Q is an organo group which divalently joins the D group to the activating polar group, R represents a monovalent group and "a" represents the D.S. (i.e., the number of appendant ethylenic unsaturated groups per anhydroglucose unit of said starch chain). Typical juxtapositional activating polar groups (i.e., E) include carbonyl

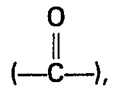

thiocarbonyl

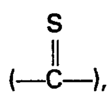 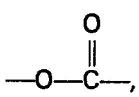 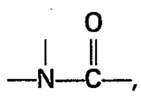

groups and the like. The ethylenically unsaturated portion of the starch chains are most typically comprised of appendant groups which individually have a molecular weight of less than 500 with those having an appendant molecular weight of greater than 50 but less than 300 (preferably from 75 to 150 M.W.) being most typical.

In a more preferred embodiment of the invention, the E group contains a

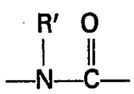

radical, R′ is a hydrogen atom or a mono-organo group which is joined directly to the nitrogen atom by a monovalent bond.

In Formula III, Q may be any divalent organo group which joins the activating radical to the starch chain e.g., linked to D and acrylamide nitrogen atoms via carbon linkages. The starch oxygen or sulphur atom and activating radical may be directly linked together by a single carbon atom or by an organo group which is comprised of a plurality of carbon atoms. The —Q— group may be comprised of substituted or unsubstituted, straight or branched aliphatic groups (e.g. alkylene), substituted or unsubstituted, arylene group (e.g., naphthlene, phenylene, etc.) as well as divalent organo groups which contain carbon to non-carbon atom linkages (e.g., organo ethers and thioethers, sulphonyl, N-methylene substituted secondary and tertiary amines (such as a $—CH_2—N(H)—Q—$ radical). If desired, the Q group-linking chain may also contain other substituents such as carbonyl, carboxylate, thiocarbonyl, etc. radicals as well as monovalent radicals such as hydroxy, halo (e.g., Br., F., Cl and I), alkyl, aryl, hydroxyalkyl, hydroxyaryl, alkoxy, aryloxy, carboxyalkyl, carboxyaryl, amine substituents, combinations thereof and the like. Advantageously the divalent Q organo group will contain less than 10 carbon atoms and preferably no more than 7 carbon atoms.

In Formula III wherein "E" is an activating group, R′ and R may be a mono-organo or hydrogen substituent. The R′ and R mono-organo groups may also contain an ester, ether, carboxylic organo acid, alcohol, hydrocarbyl (e.g., alkyl, aryl, phenyl, etc.) as well as divalent organo groups containing non-carbon atoms to carbon chain linkages (e.g., such as oxy, sulphonyl, thio, carbonyl groups, etc. as mentioned above with respect to Q). Advantageously, R′ and R are either H or a substituted or unsubstituted mono-organo group containing less than 8 carbon atoms such as a lower alkyl or phenyl group. Illustrative substituted mono-organo groups are halo substituted alkyl and phenyl, alkoxy, aryl, phenoxy, phenol and alkanol and correspondingly thiols, alkanoic, phenoic, tolyl, benzoyl, carboxy, sulphoalkyl, sulpho-phenyl, combinations thereof and the like. In the preferred embodiments of this invention, R′ and R are either hydrogen or a 1—5 carbon alkyl radical (preferably methyl) and "a" has a value of at least 0.002.

The most preferred ethylenically unsaturated starches are the starch acrylamides represented by Formula IV:

(IV) 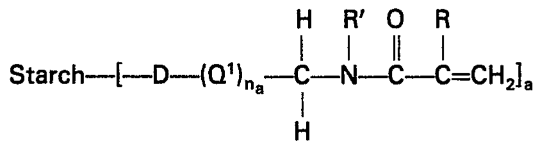

D is as defined above (preferably oxy), $Q^1$ represents a divalent organo group such as Q as defined above, "a" represents the degree of substitution, R and R' are monovalent groups as defined herein and "$n_a$" is 0 or 1.

The aforementioned Formula IV starch acrylamides may be prepared by reacting N-methylol acrylamides with starch in the presence of an acid or acid generating catalyst and a polymerisation inhibitor as illustrated by the following etherification equation V:

(V) 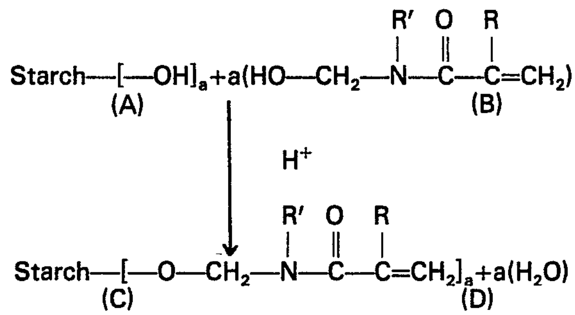


wherein "a" of reactants (A) and (B) represents the number of starch hydroxyl groups of (A) etherified with the N-methylol acrylamide reactants (B), R' and R are mono-organo or hydrogen groups such as defined below, and $H^+$ represents an acid or acid generating etherifying catalyst. The above N-methylol acrylamide reaction V may also be used to prepare a starch acrylamide reaction product (C) wherein Q as illustrated in Formula III contains an alkylene oxy or arylene oxy group by reacting the corresponding hydroxyaryl or hydroxyalkyl starch ethers (e.g., hydroxypropyl and hydroxyethyl starch ethers) with an N-methylol acrylamide wherein R' and R represent a monovalent group. Substituted acrylamides which contain a reactive N-methylol group linked to the acrylamide nitrogen atoms by intervening divalent Q organo groups and starches containing cationic and anionic or ionic acrylamide substituents may be obtained by etherifying a starch with the appropriate N-methylol acrylamide (e.g. sodium - 2 - N - methylol acrylamido - 2 - methylpropanesulphonate, a N-methylol acrylamide quaternary ammonium halide such as 3 - (N - methylol acrylamido) - 3 - methyl butyl trimethyl ammonium chloride, etc.). Representative R' substituents in V above include hydrogen, N-arylol, the N-alkylamines and N-arylamines such as N-methylol; N-ethyl-; N-isopropyl-; N-n-butyl-; N-isobutyl-; N-n-dodecyl-; N-n-octadecyl-; N-cyclohexyl-; N-phenyl; N - (2 - hydroxy - 1,1 - dimethylpropyl)-; N-p-hydroxybenzyl-; N - (3 - hydroxybutyl)-; N - (4 - hydroxy - 3,5 - dimethylbenzyl)-; N - (2 - hydroxy - 1,1 - dimethylethyl)-; N - (2 - hydroxyethyl)-; N - (5 - hydroxy - 1 - naphthyl)-; combinations thereof and the like. Illustrative acrylamide reactants (B) include N-methylol and N-thiomethyl acrylamides such as N - (hydroxymethyl) acrylamide; N - (hydroxymethyl) - N - [(1 - hydroxymethyl)propyl] acrylamide; N - (hydroxymethyl) - 2 - alkyl acrylamides, (e.g., N - (hydroxymethyl) - 2 - (methyl - heptyl) acrylamide; M - [(1 - hydroxymethyl) - 1 - nonyl] - 2 - methyl acrylamide; N - (1 - hydroxymethyl) - 2 - methyl acrylamide; N - (hydroxymethyl) - 2 - propyl acrylamide; etc.); N - (mercaptomethyl) acrylamide; N - methylol - N - isopropyl acrylamide; 3 - (N - methylol acrylamido) - 3 - methyl butyl trimethyl ammonium chloride (cationic); sodium 2 - N - methylol acrylamido - 2 - methyl propane sulphonate (anionic $-CH_2:C(H)C(:O)N(CH_2OH)C-[(CH_3)_2]CH_2SO_3^-Na^+$), combinations thereof and the like.

Reaction V may be suitably conducted in the presence of known acid or acid-generating catalysts (e.g., ammonium chloride or phosphate, mono-ammonium acid phosphate, zinc chloride, etc.), preferably at a temperature from 70°C to 95°C until the desired D.S. level is achieved. Conventional polymerisation inhibitors (e.g., hydroquinone, its derivatives, 2,5-di-t-butylquinone, etc.) prevent homopolymerisation of the starch acrylamide and acrylamide reactants. The starch acrylamides may be prepared via solution, slurry, dry, semi-dry or other appropriate condensation processes. To prepare a starch-acrylamide having a D.S. level of 0.03 or higher, it is desirable to uniformly disperse the acrylamide, acid or acid-generating catalyst and polymerisation inhibitor throughout the starch reactant. Uniform dispersal of the N-methylol-acrylamide reactant, catalyst and polymerisation inhibitor throughout the starch may be effectively accomplished by initially forming a starch slurry or treating the starch with an absorbable dispersant media (e.g., water) in which the acrylamide, catalyst and

polymerisation inhibitor are soluble or placed in mobile form and thereafter imbibing or absorbing the dispersant and its solutes into the starch granules.

As more fully explained below, the most appropriate ethylenic unsaturates for optimum water-absorbency will depend upon the starch chain type. An ethylenically unsaturated monoglucoside will typically require at least a D.S. of 2.0 or more, whereas long chain starch chains (e.g., unhydrolysed starch) typically require a considerably lower D.S. level (e.g., 0.0002) to be water-absorbent. Moreover, there exists a direct relationship between the D.S. for any given starch chain and the optimum water-absorbency which may be achieved from the starch copolymerisate thereof. An insufficient or excessive ethylenic unsaturation D.S. level will generally result in a copolymerisate having poor water-absorbency properties. A D.S. deficiency will fail to provide the necessary multifunctional polymerisation sites for the water-absorbency materials. For a majority of starches however, a starch copolymerisate which is capable of absorbing several times its own weight can be typically obtained by copolymerising a starch which has an ethylenic unsaturation ranging from 0.002 D.S. to 0.10 D.S. Higher ethylenic unsaturated D.S. levels (e.g, 0.2 or higher) will usually require more carefully controlled copolymerisation conditions with an appropriate proportion of ethylenically unsaturated monomers and type of monomer. Starch copolymerisates which typically absorb more than 10 times their weight in water are obtained from starches having an ethylenic unsaturation ranging from 0.005 D.S. to 0.05 D.S. For applications requiring a more highly water-absorbant starch (e.g., greater than 100 times the starch dry weight), it is advantageous to use starch substrates which contain appendant ethylenic unsaturation at a level ranging from 0.005 D.S. to 0.01 D.S.

The starch copolymerisate water-absorbency properties are directly related to its lattice (i.e., molecular configuration) and its ionic hydrophilicity. The characteristics of the starch chain and the polymeric linkages formed by the interpolymerised ethylenically unsaturated monomers primarily dictate the copolymerisate lattice structure. Failure to achieve proper polymeric linkage or bridging between starch molecules will adversely affect the water-absorbency properties of the starch copolymerisate. Excessively long polymeric monomer linkages tend to result in an excessively open structure which adversely affects the water-absorbency character of the starch copolymerisate lattice. Conversely, excessive cross-linking (e.g., high D.S. ethylenically unsaturated starch) or an insufficient amount of copolymerised monomer (e.g., very short linkages between starch molecules) tend to create a closed lattice and concomitant loss in water-absorbency. The net ionic charge of the copolymerisate in conjunction with its water porous lattice contributes to its water absorbtion and retention properties. Similarly, achievement of the optimum lattice and an insufficient ionic charge impairs its water-absorbency. The combination of a proper lattice and a sufficient level of ionic charge to attract and absorb water molecules within its porous lattice provides maximum water-absorbency.

In the water-absorbent starch copolymerisate, the copolymerised ethylenic unsaturated monomers (i.e., $—[M]_p$, of Formula I) contain a sufficient number of hydrophilic substituents (e.g.,$\leftarrow(W)_n$ of Formula I) to impart water-absorbency to the copolymerised starch product. Illustrative hydrophilic substituents include cationic, anionic, nonionic, ampholytic, zwitterionic, amphoteric moieties, mixtures thereof and the like. As mentioned above, it is unnecessary for each copolymerised monomeric unit to be a water-attractant group. Thus, a significant portion of the polymeric chain units may be free from ionic substituents with the balance of the units providing a sufficient level of "W" substitution to render the starch copolymerisate water-absorbent. The degree of "W" substitution necessary to achieve a water-absorbent starch copolymerisate will depend upon a multiplicity of factors. Factors such as the ionic charge and type of ionic substituents, proportions of ethylenically unsaturated starch to monomer, hydrophilicity and polarity of the copolymerised monomer units, etc. affect the required "W" substitution level. For most application, it is advantageous for the starch copolymerisate to contain either anionic or cationic substituents.

A variety of conventional ethylenically unsaturated monomers which contain either the water-absorbtive substituents or its precursors may be used to prepare the starch copolymerisates herein. The polymeric linkages may be amphiphilic (i.e., contain both polar water-soluble and hydrophobic water-insoluble groups). Anionic monomers include ethylenically unsaturated monomers which contain acid groups or acid-salt groups or acid-salt precursors. Exemplary anionic substituents include carboxylates, oxalates, benzoates, phosphonates, maleates, malates, phthalates, succinates, sulphate, sulphonates, tartrates, fumarates, mixtures thereof and the like. Illustrative ethylenically unsaturatEd cationic monomers include nitrogen-containing cations such as primary, secondary and tertiary and quaternary ammonium compounds; sulphur containing cations such as sulphonium salts, halides, etc. phosphoros containing cations such as phosphonium salts; mixtures thereof and the like. Typical nitrogen containing cations include monomers represented by the formula:

$$M'—\overset{+}{(NR_aR_bR_c)}X^-$$

wherein M' represents an ethylenically unsaturated organo group, $R_a$, $R_b$ and $R_c$ represent at least one hydrogen atom or organo group, and X is an anion (e.g. halide, acetate, $CH_3SO_4^-$, $C_2H_5SO_4^-$, etc). Exemplary $R_a$, $R_b$ and $R_c$ mono-organo groups include substituted and unsubstituted alkyl, mono-

heterocyclic (e.g. piperidine, morpholine, etc.), hydroxyalkyl, aralkyl, cycloalkyl groups as well as cyclic and heterocyclic groups divalently bonded to the nitrogen atom (e.g., $R_a$ and $R_b$ form a cyclic structure). The preferred nitrogen containing ethylenically unsaturated cationic monomers are the water-soluble, monomeric salts such as the lower alkyls of 1—5 carbon atoms (e.g. ethyl, methyl, propyl); polyoxyalkylene (e.g. polyoxyethylene and polyoxypropylene), mixtures thereof and the like; alkoxy (e.g. methoxy, ethoxy, propoxy, etc.); hydroxyalkyl and polyhydroxyalkyl (e.g. hydroxyethyl, hydroxypropyl, dihydroxypropyl, dihydroxybutyl); heterocyclic amines (e.g. morpholine); amines and amides bearing monoorganics; mixtures thereof and the like. The sulphur and phosphorus containing cationic monomers are similar to the aforementioned except either the phosphorus atom or sulphur atom replaces the nitrogen atom. The preferred phosphorus and sulphur cations are the phosphonium and sulphonium cationic salts. Water-soluble, "W'" ethylenically unsaturated monomers which contain an activating group adjacent to the ethylenic unsaturation (e.g. wherein M' contains a $CH_2{=}CR_{-E-}$radical with the activating group "E" and the "R" group being as defined above) are preferred.

Representative cationic monomers include the N-methylol acrylamide reactants mentioned above, dimethylaminoethyl methacrylate; t-butylaminoethyl methacrylate; 2 - hydroxy - 3 - methacryloxypropyl trimethyl ammonium chloride; allyl - trimethyl - ammonium chloride; S - allyl - thiuronium bromide, S - methyl(allyl - thiuronium) methosulphate, diallyl - dibutyl - diammonium chloride, diallyl - dimethyl - ammonium methosulphate, dimethallyl - diethyl - ammonium phosphate, diallyl - dimethyl - ammonium nitrate, S - allyl - (allyl - thiuronium) bromide N - methyl(4 - vinylpyridinium) methosulphate, N - methyl(2 - vinylpyridinium) methosulphate, allyl - dimethyl - beta - methacryloxyethyl - ammonium methosulphate, beta - methacryloxymethyl - trimethylammonium nitrate; beta - methacryloxyethyl - trimethylammonium p - toluene - sulphonate, delta - acryloxybutyl - tributylammonium methosulphate, methallyl - dimethyl - O - vinylphenyl - ammoniumchloride, octyldiethyl - m - vinylphenyl - ammonium phosphate, beta - hydroxyethyl - dipropyl - p - vinylphenyl - ammonium bromide, benzyl - dimethyl - 2 - methyl - 5 - vinyl - phenyl - ammonium phosphate; 3 - hydroxypropyl - diethyl - vinyl - phenylammonium sulphate; octadecyl - dimethyl - vinylphenyl - ammonium p-toluene sulphonate, amyl - dimethyl - 3 - methyl - 5 - vinylphenyl - ammonium thiocyanate, vinyloxyethyl - triethyl - ammonium chloride, N - butyl - 5 - ethyl - 2 - vinylpyridinium iodide, N - propyl - 2 - vinyl - quinolinium methyl sulphate, N - butyl - 5 - ethyl - 3 - vinylpyridinium iodide, N - propyl - 2 - vinyl - quinolinium methyl sulphate, allyl-gamma - myristamidopropyl - dimethyl - ammoniumchloride, methallyl - gamma - caprylamido - propyl - methyl - ethyl - ammonium bromide; allyl - gamma - capryl - amidopropyl - methylbenzyl - ammonium phosphate, ethallyl - gamma - myristamido - propyl - methyl - alpha - naphthylmethyl - ammonium chloride, allyl - gamma - palmit - amidopropyl - ethyl - hexyl ammonium sulphate; methallyl - gamma - lauramido - propyl - diamyl - ammonium phosphate, propallyl - gamma - lauramidopropyl - diethyl - ammonium phosphate, methallyl - gamma - caprylamido - propyl - methyl - beta - hydroxyethyl - ammonium bromide, allyl - gamma - stearamido - propyl - methyl - dihydroxypropyl - ammonium phosphate, allyl - gamma - lauramidopropyl - benzyl - beta - hydroxyethyl - ammonium chloride and methallyl - gamma - abietamidopropyl - hexyl - gamma' - hydroxy - propyl - ammonium phosphate, vinyl diethylmethyl sulphonium iodide, ethylenically unsaturated nitrogen containing cations having the formula $CH_2{=}CHQN^+(R_1R_2R_3)X^-$ such as disclosed in U.S. Patent No. 3,346,563 by Shildneck et al. with Q, $R_1$, $R_2$, $R_3$ and $X^-$ groups being defined as above, mixtures thereof and the like.

Representative anionic monomers include vinyl sulphonic acid and vinyl sulphonates (e.g. see U.S. Patent Nos, 3,970,604, by G. Wentworth and 2,859,191 by Turnbull, etc.); allyl sulphosuccinic acid and allyl sulphosuccinates (e.g. see U.S. Patent Nos. 3,219,608 by Ingleby et al.); sulpho esters of alpha-methylene carboxylic acids and salts thereof (e.g. see U.S. Patent No. 3,024,221 by LeFevre et al.); sulpho-organic esters of fumaric and maleic acids and salts thereof (e.g. see U.S. Patent No. 3,147,301 by Sheetz); acids and salts of sulphatoalkane acrylates and methacrylates (e.g. see U.S. Patent Nos. 3,893,393 by Steckler and 3,711,449 by Brendley) acrylamidoalkanesulphonic acid and salts (e.g. see U.S. Patent No. 4,008,293 by Maska et al. and 3,946,139 by Bleyle et al.), vinyl phosphonic acid and vinyl phosphonates; alpha, betaethylenically unsaturated carboxylic acids, their salts (e.g. acrylic acid, methacrylic acid, ethacrylic acid, propacrylic acid, butacrylic acid, itaconic acid, monoalkyl esters of itaconic acid, crotonic acid and crotonates, fumaric acid and fumarates, etc.), mixtures thereof and the like.

The water-absorbent starches may be prepared by initially copolymerising the starch with ethylenically unsaturated comonomers which contain reactive sites (e.g. polar or unpolymerised ethylenic unsaturation) which are then derivatised to "W" moieties. For example, the ethylenically unsaturated starches herein may be copolymerised with unsaturated precursors and converted to the anionic form such as by saponification to replace the alkyl ester group with a metal salt, and known techniques of derivatising organic compounds to acidic or the neutralised acid-salt form. Preferably the starting monomers contain the hydrophilic structure or one which can be directly converted to its "W" form by neutralisation. This will avoid the derivatisation step as well as the possibility of contaminating the copolymerisate with salts and minerals, and the need to wash and refine to remove such contaminants therefrom.

The polymeric linkages between copolymerised starch chains may be comprised of interpolymerised ionic monomeric units and monomeric units free from "W" substituents. The interpolymerised monomeric units free from "W" substituents may be selected from a broad range of ethylenically unsaturated monomers. Hydrophilic and/or hydrophobic comonomers may be used for this purpose. Illustrative interpolymerised comonomers include vinyl aromatics (e.g. styrene and styrene derivatives); the alkyl esters of alpha, betaethylenically unsaturated acids; the alpha, beta-ethylenically unsaturated nitriles, alpha, betaethylenically unsaturated amides; vinyl halides (e.g. vinyl chloride and bromide), olefins such as mono- and di-olefins; vinylidene halides (e.g. vinylidene chloride and bromide), vinyl esters (e.g. vinyl acetate and derivatives); diesters of alpha beta-ethylenically unsaturated dicarboxylic acids (e.g. dimethyl or diethyl itaconate, dimethyl or diethyl maleate, diethyl or dimethyl fumarate, etc.); alkyl vinyl ethers such as methyl or ethyl vinyl ether, etc.; alkyl vinyl ketones (e.g. methyl vinyl ketone, etc.), mixtures thereof and the like.

The polymeric linkages are advantageously predominantly comprised of polar or water-soluble monomeric units. Illustrative polar or water-soluble comonomers free from "W" substituents which may be copolymerised with the "W" monomers and the starch include the hydroxyalkyl esters of alpha, beta-ethylenically unsaturated carboxylic acids such as hydroxyethyl, hydroxyethoxyethyl, hydroxymethyl, 2,3 - dihydroxypropyl acrylates and methacrylates, di(2,3 - dihydroxypropyl) fumarate, di(hydroxyethyl) itaconate, ethyl hydroxyethylmaleate, hydroxyethyl crotonate, mixtures thereof and the like; the lower alkyl esters of alpha, beta-ethylenically unsaturated carboxylic acids (e.g. $C_1$ to $C_2$ alkyl ester of mono- and di-carboxylic acid such as methyl and ethyl ester of acrylic, methacrylic, itaconic, fumaric, crotonic, maleic, etc.); N - (3 - methylamino) propyl methacrylate; 1 - butyl - aminoethyl methacrylate; di-methylaminoethyl methacrylate; beta - (5 - butylamino)ethyl acrylate; 2 - (1,1,3,3 - tetramethylbutylamino) ethyl methacrylate, etc.); alpha, beta-ethylenically unsaturated nitriles (e.g. acrylonitrile, methacrylonitrile, ethacrylonitrile, etc.); alpha, beta-ethylenically unsaturated amides (e.g.) acrylamide and the N-substituted acrylamides such as N-methyl, N-ethyl, N-propyl, N-N-dimethyl and N-N-diethyl, N-butyl, etc. acrylamides or methacrylamides or ethacrylamides, N - (beta - dimethylamino) - ethyl acrylamide, N - (beta - dimethylamino)ethyl methacrylamide, etc.); vinyl esters (e.g. vinyl acetate, etc.) vinyl alcohol and vinyl ethers (e.g. methyl or ethyl vinyl ether, diethylaminoethyl vinyl ether, diethylaminoethyl vinyl sulphide, 5-aminopentyl vinyl ether, 3-aminopropyl vinyl ether, 2-aminoethyl vinylether, N-methylaminoethyl vinyl ether); alkyl vinyl ketones (e.g. methyl vinyl ketone, etc.); vinyl pyridine, vinyl pyrrolidone, mixtures thereof and the like.

The proportions of ethylenically unsaturated starch copolymerised with the ethylenically unsaturated monomers should typically be sufficient to provide a starch copolymerisate which is capable of absorbing at least 10 times its dry weight in water. The monomer type and starch type will affect the proportions needed to achieve optimum water-absorbency. In general, the monomer dry weight will usually fall within the range of 5 to 2000 parts by weight for each 100 parts by weight of the ethylenically unsaturated starch. For water-absorbency properties which exceed 50 times the starch copolymerisate weight, 10 to 1000 parts by weight copolymerisable monomer for each 100 parts by weight ethylenically unsaturated starch is typically required. The amount of "W" monomeric units within the polymeric linkage will usually comprise from 25% to 100% of the copolymerised monomer weight and advantageously at least a major weight of the polymeric linkage. Water-absorbent copolymers capable of absorbing at least 100 times their dry weight in water are most suitably prepared from 100 to 750 parts by weight "W" monomer, and from 0 to 200 parts by weight ethylenic monomer free from "W" monomers for each 100 parts by weight ethylenically unsaturated starch.

The water-absorbent starch copolymerisates are advantageously prepared under aqueous polymerisation conditions. Homogeneity of the reactants throughout the aqueous phase results in more uniform and reproducible water-absorbent properties. Ethylenically unsaturated starch and ethylenically unsaturated monomer systems which provide homogeneous dispersions essentially free from centrifugal residue and/or supernatent (e.g. heated to a temperature above the starch gelation point to gelatinise the starch and centrifuged for 10 minutes at $10^3$g's) as evidenced by less than 10% by weight centrifuged residue (preferably less than 5%) are particularly well suited systems for preparing the water-absorbent starch copolymerisates.

In thermal fabrication processes (e.g. moulding, calendering, extrusion, etc), a relatively high monomer and starch to water weight ratio (5:1 to 9:1) is typically used. At the reduced water levels and elevated monomer levels, incompatibility of the ethylenic unsaturated monomer starch system can arise. Elevated fabricating temperatures and pressures may be used to improve upon the compatibility of this system. Likewise water-miscible solvents in which the ethylenic unsaturated monomers are soluble (e.g. such as glycerol) or emulsifying agents may be effectively utilised to enhance the water-dispersibility of the monomer-starch system into the aqueous phase. In extrusion operations, a sufficient amount of water (with or without conventional starch plasticisers) to convert the polymerisable mass to a molten plasticised mass at elevated temperatures (e.g. 80° to 250°C) and pressures is used. The molten mass is then extruded through a die orifice into an atmosphere of reduced pressure and temperature maintained below the boiling point (B.P.) to produce void-free extrudates and above its B.P. to produce puffed extrudates.

In coating applications, it is particularly advantageous to utilise a gelatinised or pregelatinised starch. Aqueous coating compositions containing the low viscosity ethylenically unsaturated starch hydrolysates are particularly useful when it is desired to coat substrates at dry binder weight levels of at least 40%. Substrates may be uniformly wetted and coated at solids levels ranging from about 50% to 75% by weight with stability against syneresis, separation and viscosity changes. Such coatings dry easily at nominal evaporation costs. Depolymerisation of the starch to the appropriate short chain length (e.g. Dextrose Equivalent (D.E.) 0.2—100) for coating applications may be accomplished by conventional saccharification and/or thinning techniques (e.g. acid or enzymatic). The starch chains may be depolymerised to the appropriate chain length prior or after the ethylenically unsaturated derivatives are prepared. Starch chains having a degree of polymerisation comparable to that achieved by alpha-amylase hydrolysis of starch to a D.E. ranging from 0.1 to 32 (advantageously from 0.25 to 15 and most preferably less than 10) may be effectively used to coat substrates. The reduced starch chain length will not adversely affect starch coating permanence provided the ethylenically unsaturated D.S. is sufficiently high enough to provide chains which contain multifunctional unsaturation sites.

In most coating applications, the water content is typically adjusted to a fluidity most suitable to coat the substrate. The starch coating composition viscosity may vary considerably and depends to a large extent upon the type of coating operation employed (e.g. from 0,001 to 40 Pa.S (1 to 40,000 cps) or higher for extrusion coating). The proportions of water, monomer and ethylenic unsaturated starch weight ratios may likewise vary considerably (e.g., 5 to 10,000 parts by weight, i.e. pbw, water and 1 to 5,000 pbw monomer for each 100 pbw ethylenically unsaturated starch). In coating operations conducted under ambient temperatures, it is advantageous to utilise a homogeneous starch coating composition of viscosity greater than 10 cps (0.01 PaS) but less than 5,000 cps (5 PaS) (most typically from 20 cps to 1,000 cps—0.02 PaS to 1 PaS) and containing from 25 to 800 pbw water and 10 to 2,000 pbw ethylenically unsaturated monomer for each 100 pbw ethylenically unsaturated starch. Water-miscible organo solvents or surfactants are desirably incorporated into the coating composition for purposes of achieving homogeneity and a uniform monomer dispersion if the starch coating formulation contains a low amount of water and a high monomer concentration. Starch coating compositions which are adapted for use in high-speed coating operations are typically formulated at a viscosity ranging from 100 cps to 300 cps (0.1 PaS to 0.3 PaS) (with or without fugitive organo solvents or surfactants) at 30 to 500 pbw water and 25 to 1,000 pbw (preferably between 50 to 500 pbw) ethylenically unsaturated monomer for each 100 pbw ethylenically unsaturated starch. In formulations for high-speed coating operations, starch coating homogeneity is more easily achieved by using less than 3 weight parts ethylenically unsaturated monomer for each 2 weight parts of water and preferably at a weight ratio of less than one part monomer for each water part.

According to one advantageous embodiment the copolymerised ethylenically unsaturated starch consists essentially of an acrylamide starch having a D.S. ranging from 0.005 to 0.05 and a D.E. ranging from 0.25 to 15, and the copolymerisate contains 100 parts by weight copolymerised ethylenically unsaturated starch hydrolysate, from 100 to 750 parts copolymerised ethylenically unsaturated monomer which contains "W" groups and from 0 to 200 parts by weight of copolymerised ethylenically unsaturated monomers devoid of "W" groups.

The copolymerisates are copolymerised by conventional polymerisation initiating means. The unpolymerised starch and monomers may be conveniently prefabricated into the desired configuration and then copolymerised *in situ* via such conventional polymerisation initiating systems. The starch compositions will undergo copolymerisation upon exposure to conventional irradiation processes which generate *in situ* polymerisation initiators therein (e.g. electron-beam X-ray, alpha-ray, gamma-ray, etc. initiation). Alternatively, free-radical catalysts or free-radical precursors may be uniformly incorporated into the unpolymerised starch composition which will then latently copolymerise upon exposure to appropriate initiating conditions (e.g. photochemical, ultra-violet, heating or microwave techniques, etc.).

Conventional free-radical polymerisation initiators at levels sufficient to copolymerise the ethylenic unsaturated starch and monomer (e.g. 0.2% to 20% on a starch-monomer weight basis) which may be incorporated into the starch composition include the organic and inorganic peroxides (e.g. hydrogen peroxide benzoyl peroxide, tertiary butyl hydroperoxide, diisopropyl benzene hydroperoxide, cumene hydroperoxide, caproyl peroxide, methyl ethyl ketone peroxide, etc.), oxidation-reduction initiator systems (ammonium, potassium or sodium persulphates or hydrogen peroxide with reducing agents such as sodium bisulphites, sulphites, sulphoxylates, thio-sulphates, hydrazine, etc.); azo initiators (e.g. tertiary aliphatic azo compounds which undergo homolytic dissociation) such as azo di-isobutyronitrile, phenylazotriphenylmethane, 1,1′-azodicyclohexane-carbonitrile, 1,1 - dimethyl - azoethane; diazoamino compounds (e.g. 3,3-dimethyl-1-phenyl-triazene and aryldiazo thioethers) and other free-radical generating catalysts such as certain aromatic ketones (e.g. benzoin methyl ether, benzophenone and its derivatives), chlorinated aromatics as well as other free-radical type of polymerisation initiators. Free-radical initiator systems which require externally applied energy (e.g. thermally, photochemical, etc.) for free-radical generation may be used to provide a latently copolymerised system. Advantageously the free-radical polymerisation initiators are uniformly

dispersed throughout the aqueous phase of the starch composition at levels ranging from 0.3% to 10% (based on polymerisable starch and monomer dry weight).

Polymerisation initiation via U.V. and white light sources (e.g. 200—430 nanometer (nm) range, such as by carbon arc lamps, Xenon lamps, high pressure mercury lamps) is particularly useful in high-speed coating operations. If desired, conventional photosensitisers (e.g. triethanol amine-soluble benzophenones, eosin-sulphonates, methylene blue-sulphinate, combinations thereof, etc.) by active energy transfer may be incorporated into the starch composition to facilitate the copolymerisation initiation reaction. The ultra-violet polymerisation initiating processes are generally suitable for coatings or films of a thickness of less than about 20 mils (preferably less than about 10 mils). Thicker starch polymerisate articles or films normally require higher penetrating irradiation devices (e.g. X-ray, electron-beam, gamma generation, etc.) or thermal induction. The ultra-violet copolymerisation process is particularly effective for high solids starch coating applications (e.g. 55% to 75% dry solids) because it simultaneously dries and copolymerises the starch coating in a single step. Water-dispersible, non-fugitive free-radical initiating systems (e.g. catalysts which evaporate or do not leave catalytic residue in the copolymerisate) such as hydrogen peroxide are preferred.

The water-absorbent starch copolymerisates have a wide and divergent field of use. A major advantage of the water-absorbent starches of this invention resides in the ability to apply the unpolymerised product to a substrate or prefabricate it into the desired shape or configuration and then convert it to a water-absorbent, starch copolymerisate. The unpolymerised product can be applied to divergent substrates ranging from natural and man-made products and thereafter polymerised *in situ* to form an integrated product of unitary construction. This advantage is particularly useful for applications wherein it is desirable to permanently affix or impregnate a natural or synthetic substrate (e.g. films, webbings, fibres, filaments, etc.) with the water-absorbent starch. Illustrative applications for the water-absorbent starches include hygienic pads, bandages, surgical and catamenial tampons, sanitary napkins, diapers, antiperspirant and deodorant pads, sponges, surgical pads, sorptive dental rolls, disinfectants, decorative seedling films, etc. If desired, the water-absorbent starch copolymerisates may be admixed with natural and man-made products for such divergent uses as cosmetics, water scavengers, paint removers, solid humectants, pesticides, improving the water-holding capacity of soils, catalysts or chemical carrier, binders, etc.

The following examples are merely illustrative and should not be construed as limiting the scope of the invention.

Example I

An aqueous acrylamidomethyl starch hydrolysate (D.S. 0.009) was prepared employing the following proportions of reagents.

| Parts by weight (pbw) | Reagents |
|---|---|
| 279 | STA-TAPE 100 Starch[1] (250 parts by weight dry starch) |
| 21 | N-methylolacrylamide (as 60% aqueous soln) |
| 25.8 | Ammonium dihydrogen phosphate (acid catalyst) |
| 0.004 | Methyl hydroquinone (polymerisation inhibitor) |
| 247 | water |

1—STA-TAPE 100—manufactured by the A.E. Staley Manufacturing Company—A low viscosity acid-thinned, granular waxy maize starch (100% amylopectin) typically characterised as having a Brookfield viscosity of about 0.5 Pa.S (500 cps) (No. 2 spindle, 20 rpm, 150°C at a dry solids of 40 to 45%) and a D.E. of less than 1%.

The ingredients were mixed and filtered on a Buchner funnel. The starch cake was sucked free of excess aqueous phase and the unwashed cake (with 63 percent retention of non-starch reagents) was air-dried to a ten percent drying loss. The dried reaction premix had the following ratios of reagents (pbw)—250 starch; 7.95 N-methylolacrylamide, 0.025 methyl hydroquinone; 29 water. The powdered reaction premix was layered onto a stainless steel tray and heated for 2 hours in a forced air oven at 75.5°C. After resuspending in distilled water, filtering and washing free of unreacted reagent impurities, the dried product contained 0.10 percent nitrogen (dry basis), which when corrected for the nitrogen in the STA-TAPE 100 starch (0.022 percent) is equivalent to a D.S. of 0.009. Further information on the preparation of the acrylamidomethyl starches may be found in German Offenlegungsschrift 27 18 210.

A portion of the acrylamidomethyl starch (0.77 grams) was homogeneously dispersed into 8.43

grams water (15 minutes at its boiling point) and cooled to ambient temperature in a 50 ml flask. Acrylic acid (0.48 grams) and acrylamide (0.24 grams) were homogeneously dispersed into the acrylamido starch solution followed by the addition of 0.0169 grams (d.s.b.) ammonium persulphate (2.28% aqueous solution) and 0.0076 gram (d.s.b.) of sodium bisulphite (1.04% aqueous solution). Then 0.002 gram (d.s.b.) of ferrous sulphate (0.28 wt.% $FeSO_4 . 7H_2O$ aqueous solution) was added which caused an exothermic copolymerisation of the ethylenic unsaturates. Within 1 minute the entire reaction medium had gelled (12.11 g) into a copolymerisate which could be agitated with a magnetic stirrer. To convert the acrylic moieties to the anionic salt form, 0.42 gram of solid potassium hydroxide was added. The resultant viscous dispersion (12.53 g total) was then stirred for 15 minutes. The sample contained 15.24 wt.% solids. The gel was then diluted to 5 wt.% dry solids with 25.64 g distilled water and allowed to stand for 24 hours. Thereafter the dispersion (36.84 grams) was further diluted with 55.26 g distilled water to provide a 2% gel solids dispersion. The viscosity of the dispersion respectively after standing for six and twenty-three hours (No. 4 spindle at 20 rpm) was 0.5 Pa.S (500 cps) and 3.5 Pa.S (3500 cps). The solids was again diluted with 90.52 g of distilled water (1% dry solids dispersion) which after 29 hours standing had a 0.7 Pa.S (700 cps) viscosity (No. 4 spindle at 20 rpm) and after 58 hours a viscosity of 0.71 Pa.S (710 cps). The 1% gel dispersion was ambiently air-dried (evaporating dish for 11 days). A 0.1526 g sample of the resultant gummy resin was transferred and hydrate with 11.85 grams of distilled water in a 15 ml centrifuge tube. The sample swelled to the 12 ml. volume. The hydrated sample was centrifuged for 15 minutes at $10^3$g's. The supernatant liquid was decanted into a tared aluminum pan. 11.38 grams of the swollen gel was transferred to a 50 ml centrifuge tube and diluted with 11.38 grams of water and allowed to swell for 17 hours followed by centrifugation for 15 minutes at $10^3$g's. The supernatant (pH 6.6) along with the aforementioned supernatant was analysed for water-soluble starch (0.0423 grams or 27.7% by weight via evaporation).

The copolymerisate weight swelling ratio (WSR) was determined by the equation

$$WSR = \frac{I}{O - S}$$

wherein I, O and S respectively represent the weight of swollen insolubles, 9.63 grams; original sample 0.1526 grams and solubles, 0.0423 grams (i.e.,

$$WSR = \frac{I}{O - S} = \frac{9.63}{0.1526 - 0.0423} = 87).$$

Example II

A cationic, water-absorbent starch copolymerisate was prepared by copolymerising (in 34.6 pbw distilled water) 8.5 pbw (0.008 moles) acrylamidomethyl starch (d.s. 0.008), 30.9 pbw

$$CH_2{=}C(CH_3){-}\overset{\overset{\displaystyle O}{\|}}{C}{-}OCH(OH)CH_2\overset{+}{N}(CH_3)_3Cl^-$$

(0.0199 moles) and 11.1 pbw acrylamide (0.0241 moles). The copolymerisation reaction was exothermically initiated with 0.1 pbw ammonium persulphate (0.13$(NH_4)_2S_2O_8$+5 pbw water), 0.07 pbw sodium bisulphite (0.07 pbw $NaHSO_3$+5 pbw water) and 0.01 pbw $FeSO_4 \cdot 7H_2O$ (0.01 pbw $FeSO_4 \cdot 7H_2O$+4.7 pbw water). Within 90 seconds the copolymerisation reaction was completed to yield a water-absorbent, hydrated copolymerisate gel. This cationic gel was analysed in accordance with the test procedure of Example I at 25°C. The copolymerisate contained 73% (by weight) insoluble copolymerisate solids and 27% (by weight) solubles and had a 152 WSR. The insoluble copolymerisate absorbed 152 times its dry weight of water at a pH 4.0 and 25°C.

Example III

A cationic water-absorbent starch copolymerisate was prepared by copolymerising 0.008 moles acrylamidomethyl starch (D.S. 0.008 at 8.45 pbw), 0.0243 moles acrylamide (11.25 pbw) and 0.01673 moles

$$CH_2{=}C(CH_3){-}\overset{\overset{\displaystyle O}{\|}}{C}{-}OCH_2CH_2\overset{+}{N}(CH_3)_3{-}CH_3OSO_3^-$$

(30.82 pbw) with the exothermic initiating system of Example II. The resultant copolymerisate gel (copolymerisation completed within 150 seconds after initiation) was admixed with 2000 ml. water and allowed to swell for 8 days at 25°C. The decanted supernatent liquid portion thereof contained

20.18% water-solubles. The insoluble copolymerisate (79.82% of the total copolymerisable reactants) absorbed 86 times it weight of water at pH 3.6 and 25°C.

Example IV

Employing the polymerisate initiating system of Example II, 10 pbw acrylamidomethyl starch (D.S. 0.008) was copolymerised (about 3 minutes) in 56 pbw distilled water which contained 9 pbw potassium hydroxide with 12 pbw acrylic acid and 12 pbw acrylamide. The anionic copolymerisate gel (tested via the Example III water-absorbency test) absorbed 119 times its dry weight of water. This example was repeated again with a 0.056 D.S. starch. The 0.056 D.S. copolymerisate gel only absorbed 27 times its dry weight in water. The lower water absorbency for the 0.056 D.S. acrylamidomethyl starch copolymerisate is apparently attributed to its more highly cross-linked structure.

Example V

This example illustrates a water-absorbent copolymerisable starch coating composition which may be copolymerised *in situ* to provide a substrate (e.g. textile, papers, etc.) coated with the water-absorbent starch copolymerisate. The copolymerisable coating composition (pH 6.0) consisted of 10 pbw acrylamidomethyl starch (0.01 D.S.)[2], 47 pbw distilled water, 12 pbw acrylic acid, 12 pbw acrylamide, 9 pbw potassium hydroxide and 10 pbw aqueous hydrogen peroxide (30%).

Five grams of the copolymerisable composition was placed in an aluminium weighing pan (2" or approx. 5 cm I.D.) and irradiated 2.54 cm (an inch) away from a 275 watt sun lamp for 1 minute to give a firm gel. Another portion of copolymerisable starch composition was applied with a No. 40 wire wound rod to a 4"x12" (10 cmx30.5 cm) glass plate and irradiated 6 passes at 20 ft./min. (6.2 m/min) at 1.5" (3.8 cm) under a Hanovia 679A lamp (Hanovia is a Registered Trade Mark). The copolymerisable starch composition gelled on the first pass (1/6 sec.) and converted to a dry film after the sixth pass through the irradiator (i.e. one second). The WSR for the resultant starch copolymerisates were 150. A 0.056 D.S. acrylamidomethyl starch was used instead of the 0.01 D.S. acrylamidomethyl starch to provide a copolymerisate with a WSR of 30.

In another test, a 0.014 D.S. acrylamidomethyl starch was substituted for the 0.01 D.S. acrylamidomethyl starch reactant and applied to the glass plates with a No. 40 wire wound rod (pH 6.2; 0.025—0.036 Pa.S (25—36 cps) viscosity, No. 1 spindle, at 20 rpm at 25°C). After 4 passes through the irradiator, a dry, water-absorbent film coating, 83.51% insoluble copolymerisate dry solids and a WSR of 120 was obtained. This test was repeated by immersing three cotton cloth pieces (18"x6" or approx. 45.7x15.2 cm) in the 0.014 D.S. copolymerisable starch coating compositions, passing the coated cotton through the rolls of a Birch Brothers Padder, placing the coated cotton pieces on glass plates and then irradiating the three samples for 4, 6 and 8 passes. The dry coating add-on was 46% by weight. The water swelling ratios were 120 for 4 irradiation passes, 86 for 8 passes and slightly more than 100 for the cloth which was exposed to 6 passes.

Although the aforementioned Examples primarily illustrate the use of relatively high-molecular-weight starch chains, the invention applies to a broad range of ethylenically unsaturated glucose-containing monomers such as those ranging from a completely hydrolysed starch (e.g. dextrose) to an unhydrolysed starch. The glucose-containing monomers which contain multi-functional ethylenically unsaturated groups provide the necessary structure for the porous lyophilic network. The most appropriate D.S. level for a glucose-containing monomer will depend upon the number of glucose units present in its starch chain. To achieve multi-functional copolymerisable groups for a monosaccharide, disaccharide, trisaccharide or tetrasaccharide monomer would respectively require a D.S. of 2.0, 1.0, 0.66 and 0.5 with the oligosaccharides (e.g. D.P. $4^+$) and higher starch chains requiring a correspondingly lesser D.S. to achieve multifunctionality. In contrast, the higher molecular weight starches (e.g. unhydrolysed starches) will typically have multifunctional copolymerisable groups at a D.S. of 0.0002 or less.

Since the starch copolymerisates as described herein possess a porous structure, their lyophilic properties can be altered via the composition and character of unsaturated starches, monomers and lyophilic groups which are used in their preparation. By replacing the polar, water-attractant groups with non-polar and oil or solvent attractant groups, starch copolymerisates which may be tailor-made to absorb specific solvents, chemicals and/or water-immiscible liquids (e.g. oil) are now possible. Similarly, lyophilic and amphophilic starch copolymerisates may be obtained by starch copolymerisates which contain both polar water-soluble and hydrophobic, water-insoluble substituents.

**Claims**

1. A starch copolymerisate capable of absorbing several times its own weight of water comprising the copolymerisate product of ethylenically unsaturated starch molecules and ethylenically unsaturated monomers with the ethylenically unsaturated monomers forming a connective polymeric linkage

2—The 0.01 D.S. acrylamidomethyl starch hydrolysate contained an average of approximately two acrylamidomethyl groups for each starch molecule.

between the copolymerised starch molecules characterised in that the copolymerisate is made up of a non-linear lattice of a plurality of starch chains linked together by polymeric linkages represented by the formula:

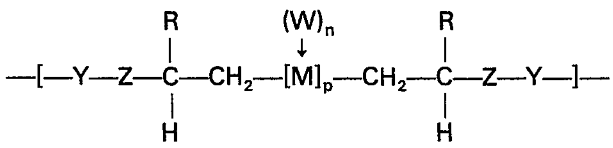

wherein Y represents a starch chain of D-glucose units, or a hydrolysed or derivatised starch chain, Z represents an organo group which links the

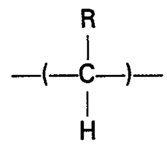

group to the carbon atom of the starch chain by a sulphur atom or an oxygen atom, R is hydrogen or a monovalent organic radical, M represents a plurality of copolymerised ethylenically unsaturated monomers with "p" representing the number of copolymerised monomeric units in the linkage, (W) is a water-attractant group or hydrophilic moiety linked to the polymeric linkage and "n" represents the number of (W) moieties contained within the polymeric linkage of the co-polymerised monomers with the number of (W) moieties being sufficient to impart water-absorbency properties to the copolymerisate.

2. A water-absorbent starch copolymerisate as claimed in claim 1 characterized in that the Z organo group consists essentially of a

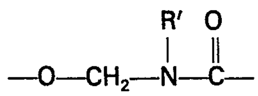

group and R′ is at least one hydrogen or mono-organo group joined directly to the nitrogen atom by a monovalent bond.

3. A water-absorbent starch copolymerisate as claimed in claim 1 or 2 characterised in that the ethylenically unsaturated starch molecules consist essentially of starch molecules and appendent ethylenic unsaturated groups of a molecular weight ranging from greater than 50 to less than 300 and the degree of substitution (D.S.) of the ethylenically unsaturated appendant groups ranges from 0.002 to 0.1, and "W" is at least one anion, cation, nonion or zwitterion.

4. A water-absorbent starch copolymerisate as claimed in any of claims 1 to 3 characterised in that the weight of ethylenically unsaturated monomer in the copolymerisate ranges from 10 to 1000 parts by weight for each 100 parts by weight of copolymerised ethylenically unsaturated starch and from 25% to 100% of the copolymerised ethylenically unsaturated monomer contains the "W" substituent.

5. A water-absorbent starch copolymerisate as claimed in any of claims 1 to 4 characterised in that the copolymerised ethylenically unsaturated starch consists essentially of amylopectin hydrolysate with a D.S. of the starch ethylenic unsaturated groups ranging from 0.005 to 0.05.

6. A water-absorbent starch copolymerisate as claimed in any of claims 1 to 5 characterised in that the copolymerised ethylenically unsaturated starch consists essentially of an acrylamide starch having a D.S. ranging from 0.005 to 0.05 and a dextrose equivalent (D.E.) ranging from 0.25 to 15, and in that the copolymerisate contains 100 parts by weight copolymerised ethylenically unsaturated starch hydrolysate, from 100 to 750 parts copolymerised ethylenically unsaturated monomer which contains "W" groups and from 0 to 200 parts by weight of copolymerised ethylenically unsaturated monomers devoid of "W" groups.

7. A method for preparing a starch copolymerisate capable of absorbing several times its own weight of water comprising the copolymerisate product of ethylenically unsaturated starch molecules and ethylenically unsaturated monomers with the ethylenically unsaturated monomers forming a connective polymeric linkage between the copolymerised starch molecules, characterised in that the copolymerisate comprises a plurality of starch chains linked together by polymeric linkages represented by the formula:

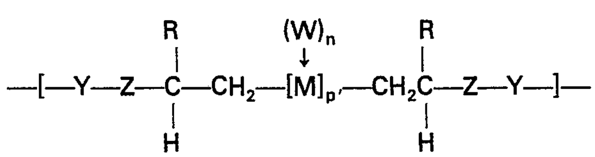

in which Y represents a starch chain of D-glucose units or a hydrolysed or derivatised starch chain, Z represents an organo group which links the

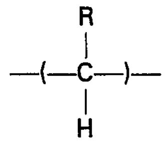

group to the carbon atom of the starch chain by a sulphur atom or an oxygen atom, R is hydrogen or a monovalent organic radical, M represents a plurality of copolymerised ethylenically unsaturated monomers which contain a sufficient number of (W) groups to impart water-absorbency to the copolymerised product, "p'" represents the number of copolymerised ethylenically unsaturated monomers linking together the starch chains, (W) is a water-attractant group or hydrophilic moiety linked to the polymeric linkage and "n" represents the number of (W) moieties contained within the polymeric linkage of the copolymerised monomers, which method comprises copolymerising:

(a) starch chains containing appendant, terminal ethylenic unsaturated groups represented by the formula:

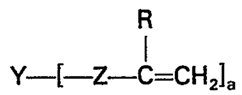

wherein Y, Z and R are as defined above, and "a" represents the degree of substitution of the terminal unsaturated groups on the starch chain, and

(b) ethylenically unsaturated monomers represented by the formula:

$$M'—(—W')_{n'}$$

wherein M' represents an ethylenically unsaturated monomer, "(W')" represents at least one water-attractant group or a precursor thereof, and n' is an integer

with the proviso that when the copolymerised $M'—(W')_{n'}$ monomer contains a precursor of the water-attractant group, a sufficient number of the precursor groups are derivatised to a water-attractant group to impart water-absorbing properties to the starch copolymerisate.

8. A method as claimed in claim 7 characterised in that (W') is at least one water-attractant group or a precursor of a water-attractant group which is an anion, cation, nonion, or zwitterion, and that Z represents an organo group which links the —CRH— group to the starch chain by an oxy moiety.

9. A method as claimed in claim 7 or 8 characterised in that Z comprises an organo group represented by the formula:

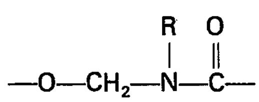

and R' is at least one hydrogen atom or a mono-organo group joined directly to the nitrogen atom by a monovalent bond.

10. A method as claimed in any of claims 7 to 9 characterised in that the appendant ethylenic unsaturated groups of the starch chains consist essentially of groups having a molecular weight ranging from 75 to 150 and "a" represents a degree of substitution (D.S.) ranging from 0.002 to 0.1.

11. A method as claimed in any of claims 7 to 10 characterised in that from 25% to 100% by weight of ethylenically unsaturated monomers contain the "W'" group and that the copolymerised weight of ethylenically unsaturated monomer ranges from 10 to 1000 parts by weight ethylenically unsaturated monomer for each 100 parts by weight ethylenically unsaturated starch.

12. A method as claimed in any of claims 7 to 11 characterised in that the ethylenically unsaturated starch consists essentially of an acrylamido starch hydrolysate having a D.S. ranging from 0.005 to 0.05 and a dextrose equivalent ranging from 0.25 to 15, and that 100 parts by weight of the ethylenically unsaturated starch hydrolysate is copolymerised with from 100 to 750 parts ethylenically unsaturated monomers which contain "W'" groups and from 0 to 200 parts by weight ethylenically unsaturated monomers free from "W'" groups.

13. A method as claimed in any of claims 7 to 12 characterised in that the starch chains consist essentially of an amylopectin hydrolysate and "W" represents at least one anion or cation.

14. A method as claimed in any of claims 7 to 13 characterised in that it includes the additional steps of applying the unpolymerised ethylenically unsaturated starch and ethylenically unsaturated monomers to a substrate and thereafter copolymerising *in situ* the applied starch and monomers.

**Patentansprüche**

1. Stärkemischpolymerisat, welches das Mehrfache seines Gewichtes an Wasser absorbieren kann, das umfaßt das Mischpolymerisatprodukt von äthylenisch ungesättigten Stärkemolekülen und äthylenisch ungesättigten Monomeren, wobei die äthylenisch ungesättigten Monomeren eine verbindende polymere Verknüpfung zwischen den mischpolymerisierten Stärkemolekülen bilden, dadurch gekennzeichnet, daß das Mischpolymerisat aufgebaut ist aus einem nicht-linearen Gitter aus einer Vielzahl von Stärkeketten, die durch polymere Verknüpfungen der nachstehend angegebenen Formel miteinander verbunden sind:

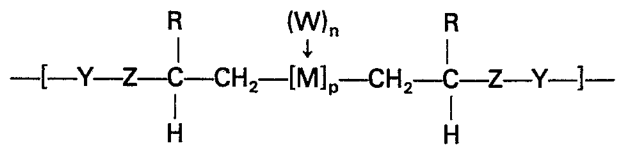

worin Y eine Stärkekette von D-Glukose-Einheiten oder eine hydrolysierte oder derivatisierte Stärkekette darstellt, Z eine organische Gruppe darstellt, welche die

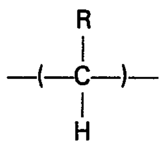

Gruppe über ein Schwefel- oder Sauerstoffatom mit dem Kohlenstoffatom der Stärkekette verknüpft, R für Wasserstoff oder einen einwertigen organischen Rest steht, M eine Vielzahl von mischpolymerisierten äthylenisch ungesättigten Monomeren darstellt, wobei p die Anzahl der mischpolymerisierten Monomereinheiten in der Verknüpfung repräsentiert, (W) für eine Wasser anziehende Gruppe oder einen hydrophilen Rest steht, die (der) mit der polymeren Verknüpfung verbunden ist, und n die Anzahl der (W)-Reste darstellt, die innerhalb der polymeren Verknüpfung der mischpolymerisierten Monomeren enthalten sind, wobei die Anzahl der (W)-Reste ausreicht, um dem Mischpolymerisat Wasser absorbierende Eigenschaften zu verleihen.

2. Wasser absorbierendes Stärkemischpolymerisat nach Anspruch 1, dadurch gekennzeichnet, daß die organische Gruppe Z im wesentlichen aus einer

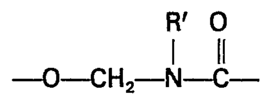

Gruppe besteht und R′ für mindestens ein Wasserstoff oder eine Monoorganogruppe steht, die durch eine einfache Bindung direkt an das Stickstoffatom gebunden ist.

3. Wasser absorbierendes Stärkemischpolymerisat nach Anspruch 1 oder 2, dadurch gekennzeichnet, daß die äthylenisch ungesättigten Stärkemoleküle im wesentlichen aus Stärkemolekülen und anhängenden äthylenisch ungesättigten Gruppen mit einem Molekulargewicht innerhalb des Bereiches von mehr als 50 bis weniger als 300 bestehen, und daß der Substitutionsgrad (D.S.) der äthylenisch ungesättigten anhängenden Gruppen innerhalb des Bereiches von 0,002 bis 0,1 liegt und W mindestens ein Anion, Kation, Nichtion oder Zwitterion ist.

4. Wasser absorbierendes Stärkemischpolymerisat nach einem der Ansprüche 1 bis 3, dadurch gekennzeichnet, daß das Gewicht des äthylenisch ungesättigten Monomeren in dem Mischpolymerisat innerhalb des Bereiches von 10 bis 1000 Gewichtsteilen auf jeweils 100 Gewichtsteile der mischpolymerisierten äthylenisch ungesättigten Stärke liegt und daß 25 bis 100% des mischpolymerisierten äthylenisch ungesättigten Monomeren den W-Substituenten enthalten.

5. Wasser absorbierendes Stärkemischpolymerisat nach einem der Ansprüche 1 bis 4, dadurch gekennzeichnet, daß die mischpolymerisierte äthylenisch ungesättigte Stärke im wesentlichen aus Amylopectinhydrolysat besteht mit einem D.S. der äthylenisch ungesättigten Gruppen der Stärke innerhalb des Bereiches von 0,005 bis 0,05.

6. Wasser absorbierendes Stärkemischpolymerisat nach einem der Ansprüche 1 bis 5, dadurch gekennzeichnet, daß die mischpolymerisierte äthylenisch ungesättigte Stärke im wesentlichen aus einer Acrylamidstärke mit einem D.S. innerhalb des Bereiches von 0,005 bis 0,05 und einem Dextroseäquivalent (D.E.) innerhalb des Bereiches von 0,25 bis 15 besteht, und daß das Mischpolymerisat

100 Gewichtsteile mischpolymerisiertes äthylenisch ungesättigtes Stärkehydrolysat, 100 bis 750 Teile mischpolymerisiertes äthylenisch ungesättigtes Monomeres, das W-Gruppen enthält, und 0 bis 200 Gewichtsteile mischpolymerisierte äthylenisch ungesättigte Monomere, die frei von W-Gruppen sind, enthält.

7. Verfahren zur Herstellung eines Stärkemischpolymerisats, das das Mehrfache seines Gewichtes an Wasser absorbieren kann und umfaßt das Mischpolymerisatprodukt von äthylenisch ungesättigten Stärkemolekülen und äthylenisch ungesättigten Monomeren, wobei die äthylenisch ungesättigten Monomeren eine verbindende polymere Verknüpfung zwischen den mischpolymerisierten Stärkemolekülen bilden, dadurch gekennzeichnet, daß das Mischpolymerisat eine Vielzahl von Stärkeketten umfaßt, die durch polymere Verknüpfungen der nachstehend angegebenen Formel miteinander verbunden sind:

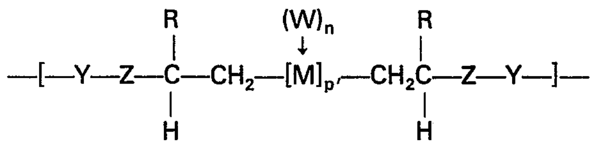

worin Y eine Stärkette von D-Glukose-Einheiten oder eine hydrolysierte oder derivatisierte Stärkekette darstellt, Z eine organische Gruppe darstellt, welche die

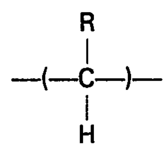

Gruppe über ein Schwefel- oder Sauerstoffatom mit dem Kohlenstoffatom der Stärkekette verbindet, R für Wasserstoff oder einen einwertigen organischen Rest steht, M eine Vielzahl von mischpolymerisierten äthylenisch ungesättigten Monomeren darstellt, die eine ausreichende Anzahl von (W)-Gruppen enthalten, um dem mischpolymerisierten Produkt ein Wasserabsorptionsvermögen zu verleihen, p' die Anzahl der mischpolymerisierten äthylenisch ungesättigten Monomeren darstellt, welche die Stärkeketten miteinander verknüpfen, (W) eine Wasser anziehende Gruppe oder ein hydrophiler Rest ist, die (der) mit der polymeren Verknüpfung verbunden ist, und n die Anzahl der (W)-Reste darstellt, die innerhalb der polymeren Verknüpfung der mischpolymerisierten Monomeren enthalten sind, das umfaßt die Mischpolymerisation von

(a) Stärkeketten, die anhängende, endständige äthylenisch ungesättigte Gruppen der Formel enthalten

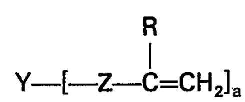

worin Y, Z und R wie oben definiert sind und a den Substitutionsgrad der endständigen ungesättigten Gruppen an der Stärkette repräsentiert, und

(b) äthylenisch ungesättigten Monomeren der Formel

$$M'—(—W')_{n'}$$

worin M' ein äthylenisch ungesättigtes Monomeres darstellt, (W') mindestens eine Wasser anziehende Gruppe oder einen Vorläufer davon darstellt und n' eine ganze Zahl ist,

mit der Maßgabe, daß dann, wenn das mischpolymerisierte $M'—(W')_{n'}—$Monomere einen Vorläufer der Wasser anziehenden Gruppe enthält, eine ausreichende Anzahl von Vorläufergruppen zu einer Wasser anziehenden Gruppe derivatisiert werden, um dem Stärkemischpolymerisat Wasser absorbierende Eigenschaften zu verleihen.

8. Verfahren nach Anspruch 7, dadurch gekennzeichnet, daß (W') mindestens eine Wasser anziehende Gruppe oder ein Vorläufer einer Wasser anziehenden Gruppe ist, die ein Anion, Kation, Nichtion oder Zwitterion ist, und daß Z eine organische Gruppe darstellt, die über einen Oxyrest die —CRH— Gruppe mit der Stärkekette verbindet.

9. Verfahren nach Anspruch 7 oder 8, dadurch gekennzeichnet, daß Z eine organische Gruppe der Formel darstellt

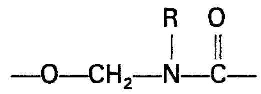

und R' mindestens ein Wasserstoffatom oder eine Monoorganogruppe ist, die durch eine einfache Bindung direkt mit dem Stickstoffatom verbunden ist.

10. Verfahren nach einem der Ansprüche 7 bis 9, dadurch gekennzeichnet, daß die anhängenden äthylenisch ungesättigten Gruppen der Stärkeketten im wesentlichen aus Gruppen mit einem Molekulargewicht innerhalb des Bereiches von 75 bis 150 bestehen und a einen Substitutionsgrad (D.S.) innerhalb des Bereiches von 0,002 bis 0,1 darstellt.

11. Verfahren nach einem der Ansprüche 7 bis 10, dadurch gekennzeichnet, daß 25 bis 100 Gew.-% der äthylenisch ungesättigten Monomeren die W'-Gruppe enthalten und daß das mischpolymerisierte Gewicht des äthylenisch ungesättigten Monomeren innerhalb des Bereiches von 10 bis 1000 Gewichtsteilen äthylenisch ungesättigtes Moncmeres auf jeweils 100 Gewichtsteile äthylenisch ungesättigte Stärke liegt.

12. Verfahren nach einem der Ansprüche 7 bis 11, dadurch gekennzeichnet, daß die äthylenisch ungesättigte Stärke im wesentlichen aus einem Acrylamidostärkehydrolysat mit einem D.S. innerhalb des Bereiches von 0,005 bis 0,05 und einem Dextroseäquivalent innerhalb des Bereiches von 0,25 bis 15 besteht und daß 100 Gewichtsteile des äthylenisch ungesättigten Stärkehydrolysats mit 100 bis 750 Teilen äthylenisch ungesättigten Monomeren, die W'-Gruppen enthalten und 0 bis 200 Gewichtsteilen äthylenisch ungesättigten Monomeren, die frei von W'-Gruppen sind, mischpolymerisiert werden.

13. Verfahren nach einem der Ansprüche 7 bis 12, dadurch gekennzeichnet, daß die Stärkeketten im wesentlichen aus einem Amylopectinhydrolysat bestehen und W mindestens ein Anion oder Kation darstellt.

14. Verfahren nach einem der Ansprüche 7 bis 13, dadurch gekennzeichnet, daß es die zusätzlichen Stufen umfaßt: Aufbringen der nicht-polymerisierten äthylenisch ungesättigten Stärke und der äthylenisch ungesättigten Monomeren auf ein Substrat und anschließendes mischpolymerisieren der aufgebrachten Stärke und Monomeren in situ.

**Revendications**

1—Copolymère d'amidon capable d'absorber plusieurs fois son propre poids d'eau comprenant le produit de copolymérisation de molécules d'amidon éthyléniquement insaturées et de monomères éthyléniquement insaturés, les monomères éthyléniquement insaturés formant une liaison polymérique de raccordement entre les molécules d'amidon copolymérisées, caractérisé en ce que le copolymère est constitué d'un réseau non linéaire de plusieurs chaînes d'amidon reliées par des liaisons polymériques représentées par la formule

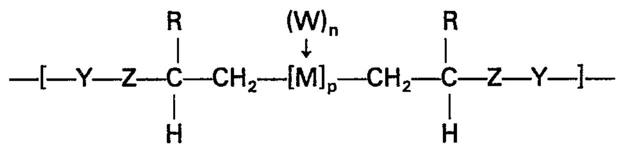

où Y représente une chaîne d'amidon d'unités D-glucose, ou une chaîne d'amidon hydrolysée ou transformée, Z represente un groupe organique qui relie le groupe

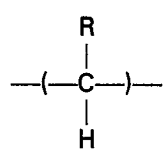

à l'atome de carbone de la chaîne d'amidon par un atome de soufre ou un atome d'oxygène, R est un hydrogène ou un radical organique monovalent, M représente plusieurs monomères éthyléniquement insaturés copolymérisés, "p" représentant le nombre d'unités monomériques copolymérisées dans la liaison, (W) est un groupe hydrophile ou une fraction hydrophile liée à la liaison polymérique et "n" représente le nombre de fractions (W) contenues dans la liaison polymérique des monomères copolymérisés, le nombre de fractions (W) étant suffisant pour conférer des propriétés d'absorption d'eau au copolymère.

2—Copolymère d'amidon absorbant l'eau tel que revendiqué dans la revendication 1, caractérisé en ce que le groupe organique Z se compose essentiellement d'un groupe

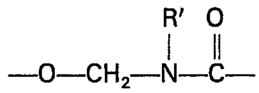

et en ce que R est au moins un hydrogène ou un groupe organique relié directement à l'atome d'azote par une liaison monovalente.

3—Copolymère d'amidon absorbant l'eau tel que revendiqué dans la revendication 1 ou la revendication 2, caractérisé en ce que les molécules d'amidon éthyléniquement insaturées se composent essentiellement de molécules d'amidon et de groupes éthyléniques insaturés rattachés d'un poids moléculaire allant de plus de 50 à moins de 300, et en ce que le degré de substitution (D.S.) des groupes rattachés éthyléniquement insaturés va de 0,002 à 0,1, et en ce que "W" est au moins un anion, un cation, un fragment non-ionique ou un zwitterion.

4—Copolymère d'amidon absorbant l'eau tel que revendiqué dans l'une quelconque des revendications 1 à 3, caractérisé en ce que le poids de monomère éthyléniquement insaturé dans le copolymère va de 10 à 1000 parties en poids pour 100 parties en poids d'amidon éthyléniquement insaturé copolymérisé, et en ce que de 25% à 100% de monomères éthyléniquement insaturés copolymérisés contiennent le substituant "W".

5—Copolymère d'amidon absorbant l'eau tel que revendiqué dans l'une quelconque des revendications 1 à 4, caractérisé en ce que l'amidon éthyléniquement insaturé copolymérisé se compose essentiellement d'hydrolysat d'amylopectine avec un D.S. des groupes éthyléniques insaturés d'amidon compris entre 0,005 et 0,05.

6—Copolymère d'amidon absorbant l'eau tel que revendiqué dans l'une quelconque des revendications 1 à 5, caractérisé en ce que l'amidon éthyléniquement insaturé copolymérisé se compose essentiellement d'un amidon d'acrylamide ayant un D.S. compris entre 0,005 et 0,05 et d'un équivalent de dextrose (E.D.) compris entre 0,25 et 15, et en ce que le copolymère contient 100 parties en poids d'hydrolysat d'amidon éthyléniquement insaturé copolymérisé, de 100 à 750 parties de monomères éthyléniquement insaturés copolymérisés qui contiennent des groupes "W" et de 0 à 200 parties en poids de monomères éthyléniquement insaturés copolymérisés dépourvus de groupes "W".

7—Procédé de préparation d'un copolymère d'amidon capable d'absorber plusieurs fois son propre poids d'eau, comprenant le produit de copolymérisation de molécules d'amidon éthyléniquement insaturées et de monomères éthyléniquement insaturés, les monomères éthyléniquement insaturés formant une liaison polymérique de raccordement entre les molécules d'amidon copolymérisées, caractérisé en ce que le copolymère comprend plusieurs chaînes d'amidon reliées par des liaisons polymériques représentées par la formule

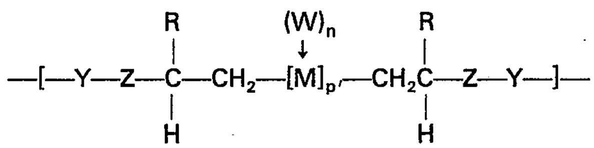

où Y représente une chaîne d'amidon d'unités D-glucose ou une chaîne d'amidon hydrolysée ou dérivée, Z représente un groupe organique qui relie le groupe

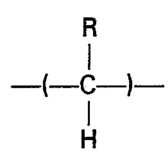

à l'atome de carbone de la chaîne d'amidon par un atome de soufre ou un atome d'oxygène, R est un hydrogène ou un radical organique monovalent, M représente plusieurs monomères ethyléniquement insaturés copolymérisés contenant un nombre suffisant de groupes (W) pour conférer une capacité d'absorption d'eau au produit copolymérisé, "p'" représente le nombre de monomères éthyléniquement insaturés copolymérisés reliant les chaînes d'amidon, (W) est un groupe hydrophile ou une fraction hydrophile liée à la liaison polymérique et "n" représente le nombre de fractions (W) contenues dans la liaison polymérique des monomères copolymérisées, procédé dans lequel on copolymérise:

(a) des chaînes d'amidon contenant des groupes éthyléniques insaturés terminaux rattachés représentés par la formule

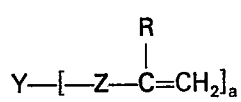

où U, Z et R sont tels que définis ci-dessus, et "a" représente le degré de substitution des groupes insaturés terminaux sur la chaîne d'amidon, et

(b) des monomères éthyléniquement insaturés représentés par la formule

$$M'—(—W')_{n'}$$

où M' représente un monomère éthyléniquement insature', "(W')" représente au moins un groupe hydrophile ou un de ses précurseurs, et n' est un nombre entier,

avec la précision que lorsque le monomère M'—$(W')_{n'}$ contient un précurseur du groupe hydrophile, un nombre suffisant de groupes précurseurs sont transformés en groupes hydrophiles pour conférer des propriétés d'absorption d'eau au copolymère d'amidon.

8—Procédé tel que revendiqué dans la revendication 7, caractérisé en ce que (W') est au moins un groupe hydrophile ou un précurseur d'un groupe hydrophile qui est anionique, cationique, non-ionique ou amphotère, et en ce que Z représente un groupe organique que relie le groupe —CRH— à la chaîne d'amidon par une fraction oxy.

9—Procédé tel que revendiqué dans la revendication 7 ou la revendication 8, caractérisé en ce que Z comprend un groupe organique représenté par la formule

$$—O—CH_2—\overset{R}{\overset{|}{N}}—\overset{O}{\overset{\|}{C}}—$$

et en ce que R' est au moins un atome d'hydrogène ou un groupe organique relié directement à l'atome d'azote par une liaison monovalente.

10—Procédé tel que revendiqué dans l'une quelconque des revendications 7 à 9, caractérisé en ce que les groupes éthyléniques insaturés rattachés des chaînes d'amidon se composent essentiellement de groupes ayant un poids moléculaire compris entre 75 et 150, et en ce que "a" représente un degré de substitution (D.S.) compris entre 0,002 et 0,1.

11—Procédé tel que revendiqué dans l'une quelconque des revendications 7 à 10, caractérisé en ce que de 25% à 100% en poids de monomères éthyléniquement insaturés contiennent le groupe "W'" et en ce que le poids copolymérisé des monomères éthyléniquement insaturés est compris entre 10 et 1000 parties en poids de monomère éthyléniquement insaturé pour 100 parties en poids d'amidon éthyléniquement insaturé.

12—Procédé tel que revendiqué dans l'une quelconque des revendications 7 à 11 caractérisé en ce que l'amidon éthyléniquement insaturé se compose essentiellement d'un hydrolysat d'acrylamido-amidon ayant un D.S. compris entre 0,005 et 0,05 et d'un équivalent dextrose compris entre 0,25 et 15, et en ce que 100 parties en poids de l'hydrolysat d'amidon éthyléniquement insaturé sont copolymérisées avec de 100 à 750 parties de monomères éthyléniquement insaturés qui contiennent des groupes "W'" et de 0 à 200 parties en poids de monomères éthyléniquement insaturés dépourvus de groupes "W'".

13—Procédé tel que revendiqué dans l'une quelconque des revendications 7 à 12, caractérisé en ce que les chaînes d'amidon se composent essentiellement d'un hydrolysat d'amylopectine et en ce que "W" représente au moins un anion ou un cation.

14—Procédé tel que revendiqué dans l'une quelconque des revendications 7 à 13, caractérisé en ce qu'il comprend les étapes supplémentaires dans lesquelles on applique l'amidon éthyléniquement insaturé non polymérisé et les monomères éthyléniquement insaturés sur un substrat puis on copolymérise *in situ* l'amidon et les monomères appliqués.